# EUROPEAN PATENT APPLICATION

(11) **EP 4 561 145 A1**
(43) Date of publication of application: **28.05.2025**
(21) Application number: 23842036.8
(22) Date of filing: 28.06.2023
(51) Int. Cl.: H04W 24/02, H04W 36/00

(54) **L1/L2 MOBILITY CONFIGURATION INFORMATION PROCESSING METHOD AND APPARATUS, AND STORAGE MEDIUM**

(30) Priority: 21.07.2022 CN 202210860887
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN); ZHANG, Bufang, Beijing 100085 (CN); ZENG, Erlin, Beijing 100085 (CN); LIANG, Jing, Beijing 100085 (CN)
(74) Representative: Studio Torta S.p.A.
(86) International application number: PCT/CN2023/103191
(87) International publication number: WO 2024/016970

(57) **Abstract**

The present disclosure provides a method for processing configuration information about L1/L2 mobility, an apparatus and a storage medium, a radio resource control RRC message transmitted by a network device is received, where the RRC message includes configuration information of each candidate cell pre-configured and related to L1/L2 mobility; application and/or storage operation(s) is performed on the configuration information of each candidate cell. The application operation and/or storage operation(s) performed by the terminal on the configuration information of each candidate cell can be defined, and the specific application operation and/or storage operation(s) to be performed can be agreed in advance, or appropriate application operation and/or storage operation(s) can be selected according to specific circumstances, so as to clarify the specific behavior of the terminal after receiving the configuration information of each candidate cell pre-configured and related to L1/L2 mobility, and avoid the failure of serving cell change due to the incorrect application of the configuration information by the terminal.

## Description

The present disclosure claims priority to Chinese Patent Application No. 202210860887.6, filed with the Chinese National Intellectual Property Administration on July 21, 2022 and entitled "METHOD FOR PROCESSING CONFIGURATION INFORMATION ABOUT L1/L2 MOBILITY, APPARATUS AND STORAGE MEDIUM", which is incorporated herein by reference in its entirety.

### TECHNICAL FIELD

The present disclosure relates to the field of communication technologies, and more specifically, relates to a method for processing configuration information about L1/L2 mobility, an apparatus, and a storage medium.

### BACKGROUND

Before R17, only L3 mobility was considered for completion of cell change/addition. That is, a network device transmits an L3 mobility command to a UE, and when the UE receives the L3 mobility command transmitted by the network device, the UE performs a mobility process to access a target cell to complete cell change/addition. Starting from R17, L1/L2 mobility command is also considered. That is, the network device may send a mobility command to a UE via L1/L2 signaling to instruct the UE to perform cell change/addition.

After the terminal receives configuration information of each candidate cell related to L1/L2 mobility pre-configured by the network device, a failure of serving cell change may occur.

### SUMMARY

The present disclosure provides a method for processing configuration information about L1/L2 mobility, an apparatus and a storage medium, to clarify the specific behavior of a terminal after receiving configuration information of each candidate cell pre-configured and related to L1/L2 mobility, so as to avoid the terminal from incorrectly applying the configuration information and thus causing the failure of serving cell change.

In a first aspect, the present disclosure provides a method for processing configuration information about L1/L2 mobility, the method is applied to a terminal and includes:
receiving a radio resource control RRC message transmitted by a network device, where the RRC message includes configuration information of each candidate cell which is pre-configured and related to L1/L2 mobility;
performing an application operation and/or a storage operation on the configuration information of each candidate cell.

Optionally, the performing an application operation and/or a storage operation on the configuration information of each candidate cell includes:
for any configuration information of a candidate cell among the configuration information of each candidate cell received in the RRC message, if pre-stored configuration information comprises configuration information of the candidate cell, replacing the pre-stored configuration information of the candidate cell with the newly received configuration information of the candidate cell; and/or
for configuration information of at least one candidate cell among the configuration information of each candidate cell received in the RRC message, if pre-stored configuration information does not comprise the configuration information of the candidate cell, adding the configuration information of the candidate cell to the pre-stored configuration information; and/or
for configuration information of at least one candidate cell among the configuration information of each candidate cell received in the RRC message, if it is indicated from a network to delete the candidate cell, deleting the configuration information of the candidate cell from pre-stored configuration information; and/or
deleting pre-stored configuration information and storing the configuration information of each candidate cell which is newly received in the RRC message.

Optionally, the performing an application operation and/or a storage operation on the configuration information of each candidate cell includes:
if the configuration information of each candidate cell includes configuration information of a current serving cell, applying the configuration information of the current serving cell in the configuration information of each candidate cell by default; or
if the configuration information of each candidate cell includes configuration information of a current serving cell, continuing applying configuration information currently used by the current serving cell by default; or
if the configuration information of each candidate cell includes configuration information of a current serving cell, determining whether to apply the configuration information of the current serving cell in the configuration information of each candidate cell according to a network indication.

Optionally, the determining whether to apply the configuration information of the current serving cell in the configuration information of each candidate cell according to a network indication includes:
if the network indication of applying the configuration information of the current serving cell is received, applying the configuration information of the current serving cell in the configuration information of each candidate cell; or
if the network indication of not applying the configuration information of the current serving cell is received, continuing applying the configuration information currently used by the current serving cell.

Optionally, the performing an application operation and/or a storage operation on the configuration information of each candidate cell includes:
if the RRC message further includes serving cell change or addition indication information, performing one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

Optionally, the determining whether to apply configuration information of a target serving cell corresponding to the serving cell change or addition indication information in the configuration information of each candidate cell according to a network indication includes:
if the network indication of applying the configuration information of the target serving cell is received, applying the configuration information of the target serving cell corresponding to the serving cell change or addition indication information in the configuration information of each candidate cell; or
if the network indication of not applying the configuration information of the target serving cell is received, continuing applying configuration information currently used by a current serving cell.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Optionally, the method may further include:
receiving serving cell change or addition indication information transmitted by the network device through L1 and/or L2, determining configuration information of a target serving cell corresponding to the serving cell change or addition indication information from the configuration information of each candidate cell stored, and applying the configuration information of the target serving cell.

Optionally, the storage operation includes:
adopting a new variable to store the configuration information of each candidate cell.

Optionally, the adopting a new variable to store the configuration information of each candidate cell includes one or more of the following:
storing the configuration information of each candidate cell in form of a list, where each entry in the list records a candidate cell and configuration information of the candidate cell; or
adopting multiple variables to store configuration information of different layers in the configuration information of each candidate cell.

In a second aspect, the present disclosure provides a method for processing configuration information about L1/L2 mobility, the method is applied to a network device and includes:
acquiring configuration information of each candidate cell which is pre-configured and related to L1/L2 mobility; and
transmitting an RRC message to a terminal, where the RRC message includes configuration information of each candidate cell which is pre-configured and related to L1/L2 mobility.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Optionally, the method may further includes:
transmitting a first network indication to the terminal, where the first network indication is used to indicate whether to apply configuration information of a current serving cell in the configuration information of each candidate cell by the terminal.

Optionally, the RRC message further includes serving cell change or addition indication information, and the serving cell change or addition indication information is used to instruct the terminal to change to a target serving cell or add a target serving cell.

Optionally, the method may further include:
transmitting a second network indication to the terminal, where the second network indication is used to indicate whether to apply configuration information of the target serving cell corresponding to the serving cell change or addition indication information in the configuration information of each candidate cell by the terminal.

In a third aspect, the present disclosure provides a terminal, including a memory, a transceiver, and a processor;
the memory is configured to store a computer program; the transceiver is configured to transmit and receive data under control of the processor; the processor is configured to read the computer program in the memory and perform the following operations:
controlling the transceiver to receive a radio resource control RRC message transmitted by a network device, where the RRC message includes configuration information of each candidate cell which is pre-configured and related to L1/L2 mobility; and
performing an application operation and/or a storage operation on the configuration information of each candidate cell.

Optionally, when performing an application operation and/or a storage operation on the configuration information of each candidate cell, the processor is configured to:
for any configuration information of a candidate cell among the configuration information of each candidate cell received in the RRC message, if pre-stored configuration information comprises configuration information of the candidate cell, replace the pre-stored configuration information of the candidate cell with the newly received configuration information of the candidate cell; and/or
for configuration information of at least one candidate cell among the configuration information of each candidate cell received in the RRC message, if pre-stored configuration information does not comprise the configuration information of the candidate cell, add the configuration information of the candidate cell to the pre-stored configuration information; and/or
for configuration information of at least one candidate cell among the configuration information of each candidate cell received in the RRC message, if it is indicated from a network to delete the candidate cell, delete the configuration information of the candidate cell from pre-stored configuration information; and/or
delete pre-stored configuration information and storing the configuration information of each candidate cell which is newly received in the RRC message.

Optionally, when performing an application operation and/or a storage operation on the configuration information of each candidate cell, the processor is configured to:
if the configuration information of each candidate cell comprises configuration information of a current serving cell, apply the configuration information of the current serving cell in the configuration information of each candidate cell by default; or
if the configuration information of each candidate cell comprises configuration information of a current serving cell, continue applying configuration information currently used by the current serving cell by default; or
if the configuration information of each candidate cell comprises configuration information of a current serving cell, determine whether to apply the configuration information of the current serving cell in the configuration information of each candidate cell according to a network indication.

Optionally, when determining whether to apply the configuration information of the current serving cell in the configuration information of each candidate cell according to a network indication, the processor is configured to:
if the network indication of applying the configuration information of the current serving cell is received, apply the configuration information of the current serving cell in the configuration information of each candidate cell; or
if the network indication of not applying the configuration information of the current serving cell is received, continue applying the configuration information currently used by the current serving cell.

Optionally, when performing an application operation and/or a storage operation on the configuration information of each candidate cell, the processor is configured to:
if the RRC message further includes serving cell change or addition indication information, perform one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

Optionally, when determining whether to apply configuration information of a target serving cell corresponding to the serving cell change or addition indication information in the configuration information of each candidate cell according to a network indication, the processor is configured to:
if the network indication of applying the configuration information of the target serving cell is received, apply the configuration information of the target serving cell corresponding to the serving cell change or addition indication information in the configuration information of each candidate cell; or
if the network indication of not applying the configuration information of the target serving cell is received, continue applying the configuration information currently used by a current serving cell.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Optionally, the processor is further configured to:
control the transceiver to receive serving cell change or addition indication information transmitted by the network device through L1 and/or L2, determine configuration information of a target serving cell corresponding to the serving cell change or addition indication information from the configuration information of each candidate cell stored, and apply the configuration information of the target serving cell.

Optionally, the storage operation performed by the processor includes:
adopting a new variable to store the configuration information of each candidate cell.

Optionally, the adopting a new variable to store the configuration information of each candidate cell includes one or more of the following:
storing the configuration information of each candidate cell in form of a list, where each entry in the list records a candidate cell and configuration information of the candidate cell; or
adopting multiple variables to store configuration information of different layers in the configuration information of each candidate cell.

In a fourth aspect, the present disclosure provides a network device, including a memory, a transceiver, and a processor:
the memory is configured to store a computer program; the transceiver is configured to transmit and receive data under control of the processor; the processor is configured to read the computer program in the memory and perform the following operations:
acquiring configuration information of each candidate cell which is pre-configured and related to L1/L2 mobility; and
controlling the transceiver to transmit an RRC message to a terminal, where the RRC message includes configuration information of each candidate cell which is pre-configured and related to L1/L2 mobility.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Optionally, the processor is further configured to:
control the transceiver to transmit a first network indication to the terminal, where the first network indication is used to indicate whether to apply configuration information of a current serving cell in the configuration information of each candidate cell by the terminal.

Optionally, the RRC message further includes serving cell change or addition indication information, and the serving cell change or addition indication information is used to instruct the terminal to change to a target serving cell or add a target serving cell.

Optionally, the processor is further configured to:
control the transceiver to transmit a second network indication to the terminal, where the second network indication is used to indicate whether to apply configuration information of the target serving cell corresponding to the serving cell change or addition indication information in the configuration information of each candidate cell by the terminal.

In a fifth aspect, the present disclosure provides an apparatus for processing configuration information about L1/L2 mobility, including:
a communicating unit, configured to receive a radio resource control RRC message transmitted by a network device, where the RRC message includes configuration information of each candidate cell which is pre-configured and related to L1/L2 mobility;
a processing unit, configured to perform an application operation and/or a storage operation on the configuration information of each candidate cell.

In a sixth aspect, the present disclosure provides an apparatus for processing configuration information about L1/L2 mobility, including:
an acquiring unit, configured to acquire configuration information of each candidate cell which is pre-configured and related to L1/L2 mobility;
a communicating unit, configured to transmit an RRC message to a terminal, where the RRC message includes configuration information of each candidate cell which is pre-configured and related to L1/L2 mobility.

In a seventh aspect, the present disclosure provides a processor-readable storage medium, where the processor-readable storage medium stores a computer program, and the computer program is used to enable the processor to execute the method described in the first aspect.

The present disclosure provides a method for processing configuration information about L1/L2 mobility, an apparatus, and a storage medium, a radio resource control (RRC) message transmitted by a network device is received, where the RRC message includes configuration information of each candidate cell which is pre-configured and related to L1/L2 mobility; application operation and/or a storage operation(s) is performed on the configuration information of each candidate cell. The application operation and/or storage operation(s) performed by the terminal on the configuration information of each candidate cell can be defined, and the specific application operation and/or storage operation(s) to be performed can be agreed in advance, or appropriate application operation and/or storage operation(s) can be selected according to specific circumstances, so as to clarify the specific behavior of the terminal after receiving the configuration information of each candidate cell which is pre-configured and related to L1/L2 mobility, and avoid the failure of serving cell change due to the incorrect application of the configuration information by the terminal.

It should be understood that the contents described in the above summary section are not intended to limit the key or important features of the embodiments of the present disclosure, nor do they limit the scope of the present disclosure. Other features of the present disclosure will become easier to understand through the following description.

### BRIEF DESCRIPTION OF DRAWINGS

In order to more clearly illustrate the technical solutions in the present disclosure or the prior art, the following will briefly introduce the drawings required for use in the embodiments or the prior art descriptions. Obviously, the drawings in the following description are some embodiments of the present disclosure. For ordinary technicians in this field, other drawings can also be obtained based on these drawings without paying creative labor.
FIG. 1 is a system schematic diagram of a method for processing configuration information about L1/L2 mobility provided in an embodiment of the present disclosure.
FIG. 2 is a flowchart of a method for processing configuration information about L1/L2 mobility provided by an embodiment of the present disclosure.
FIG. 3 is a flowchart of a method for processing configuration information about L1/L2 mobility provided by another embodiment of the present disclosure.
FIG. 4 is a structural diagram of a terminal provided in an embodiment of the present disclosure.
FIG. 5 is a structural diagram of a network device provided in an embodiment of the present disclosure.
FIG. 6 is a structural diagram of an apparatus for processing configuration information about L1/L2 mobility provided in an embodiment of the present disclosure.
FIG. 7 is a structural diagram of an apparatus for processing configuration information about L1/L2 mobility provided in another embodiment of the present disclosure.

### DESCRIPTION OF EMBODIMENTS

The term "and/or" in the present disclosure describes the association relationship of associated objects, indicating that three relationships may exist. For example, A and/or B can represent: A exists alone, A and B exist at the same time, and B exists alone. The character "/" generally indicates that the associated objects before and after are in an "or" relationship.

In the embodiments of the present disclosure, the term "multiple" refers to two or more, and other quantifiers are similar.

In the feMIMO (Further Enhanced MIMO, Further Enhanced MIMO) project of the R17 standard, the ICBM (Inter-cell beam management, Inter-cell beam management) mechanism is discussed. The basic flow is that a network transmits a candidate TRP (Transmission and Reception Point, Transmission and Reception Point) and configuration information for measurement of its beam to a terminal (Use Equipment, UE). After receiving the configuration information, the UE performs corresponding L1 (Layer 1, Layer 1) measurement according to the configuration information and reports a measurement result to the network device. The network device finds that a signal quality of the current TRP is not good through the L1 measurement result reported by the UE. The network transmits an L1/L2 instruction to the UE, so as to enable the UE to change to a TRP with better signal quality to continue data transmission, but its serving cell remains unchanged. In the R18 NR mobility project, it is hoped that the scenario of serving cell change will be considered on the foundation of R17 ICBM.

In the R18 NR mobility project, the scenario of changing the L1/L2 mobility with serving cell change (L1/L2 mobility with serving cell change) will be discussed. This requires that the UE should be configured with beam measurement configuration and configuration information of candidate cell(s) in advance. But after the UE receives the pre-configured configuration information of candidate cell(s), the UE is unaware of how to process or apply the configuration information, which may cause the UE to incorrectly apply the configuration information and thus cause the failure of serving cell change.

In order to solve the above technical problems, an embodiment of present disclosure provides a method for processing configuration information about L1/L2 mobility, where a radio resource control RRC (Radio Resource Control, Radio Resource Control) message transmitted by network device is received, the RRC message includes configuration information of each candidate cell which is pre-configured and related to L1/L2 mobility, and application operation and/or a storage operation is performed on configuration information of each candidate cell. The application operation and/or storage operation performed by the terminal on the configuration information of each candidate cell can be defined, and the specific application operation and/or storage operation to be performed can be agreed in advance, or an appropriate application operation and/or storage operation can be selected according to specific circumstances, so as to clarify the specific behavior of the terminal after receiving the configuration information of each candidate cell pre-configured and related to L1/L2 mobility, and avoid the failure of serving cell change due to the incorrect application of the configuration information by the terminal.

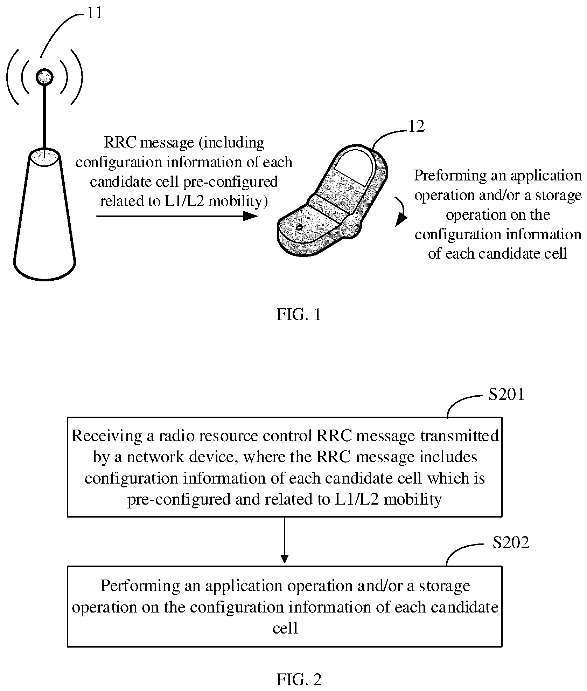

The method for processing configuration information about L1/L2 mobility provided by the embodiments of the present disclosure is applicable to the system as shown in FIG. 1, including a network device and a terminal, where the network device can transmit an RRC message to the terminal, where the RRC message includes configuration information of each candidate cell which is pre-configured and related to L1/L2 mobility, and the terminal can perform an application operation and/or a storage operation on the configuration information of each candidate cell.

The technical solution provided by the embodiments of the present disclosure can be applied to a variety of systems, especially 5G systems. For example, the applicable systems can be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, a frequency division duplex (frequency division duplex, FDD) system, a time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These various systems include terminal devices and network devices. The system may also include a core network part, such as an evolved packet system (Evolved Packet System, EPS), a 5G system (5GS), etc.

The terminal device involved in the embodiments of the present disclosure may be a device that provides voice and/or data connectivity to a user, a handheld device with a wireless connection function, or other processing apparatuses connected to a wireless modem. In different systems, the names of the terminal device may also be different. For example, in a 5G system, the terminal device may be called a user equipment (User Equipment, UE). A wireless terminal device can communicate with one or more core networks (Core Network, CN) via a radio access network (Radio Access Network, RAN). Wireless terminal devices can be mobile terminal devices, such as mobile phones (or "cellular" phones) and computers with mobile terminal devices, such as portable, pocket-sized, handheld, computer-built or vehicle-mounted mobile apparatuses, which exchange languages and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. A wireless terminal device can also be called a system, a subscriber unit (subscriber unit), a subscriber station (subscriber station), a mobile station (mobile station), a mobile terminal (mobile), a remote station (remote station), an access point (access point), a remote terminal device (remote terminal), an access terminal device (access terminal), a user terminal device (user terminal), a user agent (user agent), and a user apparatus (user device), but is not limited in the embodiments of the present disclosure.

The network device involved in the embodiments of the present disclosure may be a base station, the base station may include multiple cells providing services to the terminal. Depending on the specific application scenarios, the base station may also be called an access point, or may be a device in the access network that communicates with the wireless terminal device through one or more sectors on the air interface, or other names. The network device may be used to interchange received air frames with internet protocol (Internet Protocol, IP) packets, and serve as a router between the wireless terminal device and the rest of the access network, where the rest of the access network may include an internet protocol (IP) communication network. The network device may also coordinate the attribute management of the air interface. For example, the network device involved in the embodiments of the present disclosure may be a network device (Base Transceiver Station, BTS) in the global system for mobile communications (Global System for Mobile communications, GSM) or code division multiple access (Code Division Multiple Access, CDMA), or a network device (NodeB) in wide-band code division multiple access (Wide-band Code Division Multiple Access, WCDMA), or an evolutional network device (evolutional NodeB, eNB or e-NodeB) in the long term evolution (longterm evolution, LTE) system, a 5G base station (gNB) in the 5G network architecture (next generation system), or a home evolved NodeB (Home evolved NodeB, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the CU and the DU may also be arranged geographically separately.

The technical solutions in the embodiments of the present disclosure will be clearly and completely described below in conjunction with the drawings in the embodiments of the present disclosure. Obviously, the described embodiments are only part of the embodiments of the present disclosure, not all of the embodiments. Based on the embodiments in the present disclosure, all other embodiments obtained by ordinary technicians in this field without paying creative work belong to the scope of protection in the present disclosure.

Among them, the method and the apparatus are based on the same application concept. Since the principles of solving problems by the method and the apparatus are similar, reference can be made to each other for their implementations of the apparatus and the method, and the repeated parts will not be repeated.

FIG. 2 is a flowchart of a method for processing configuration information about L1/L2 mobility provided in the embodiment. As shown in FIG. 2, the embodiment provides a method for processing configuration information about L1/L2 mobility, the execution entity is a terminal, and the specific steps of the method are as follows:
S201, receiving a radio resource control (RRC) message transmitted by a network device, where the RRC message includes configuration information of each candidate cell which is pre-configured and related to L1/L2 mobility.

In this embodiment, in the scenario of L1/L2 mobility with serving cell change (L1/L2 mobility with serving cell change), the network device can transmit the configuration information of each candidate cell which is pre-configured and related to L1/L2 mobility to the terminal through the RRC message.

Optionally, the configuration information of each candidate cell described in the embodiment includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Among them, optionally, corresponding first configuration information can be configured for each candidate cell in the scenario where respective candidate cells do not cross DU (Distributed Unit, distributed unit), that is, the respective candidate cells share configuration information of a MAC layer, an RLC layer and a PDCP layer, but the configuration information of a physical layer is different; corresponding second configuration information is configured for each candidate cell in the scenario where respective candidate cells cross DU, that is, respective candidate cells share configuration information of the PDCP layer, but the configuration information of the physical layer, the MAC layer and the RLC layer is different; corresponding third configuration information is configured for each candidate cell in the scenario where respective candidate cells cross CU (Centralized Unit, central unit), that is, the configuration information of the physical layer, the MAC layer, the RLC layer and the PDCP layer of respective candidate cells is different.

It should be noted that the configuration information of each candidate cell can realize configuration of any one of the above configuration information for each candidate cell, or configuration of two or three pieces of configuration information for each candidate cell. For example, the first configuration information and the second configuration information corresponding to each candidate cell are configured, or the first configuration information and the third configuration information corresponding to each candidate cell are configured, or the second configuration information and the third configuration information corresponding to each candidate cell are configured, or the first configuration information, the second configuration information and the third configuration information corresponding to each candidate cell are configured, and the terminal can select a set of configuration information according to a network indication to perform the following application operation and/or a storage operation(s), or can select a set of configuration information to perform application and/or storage operation(s) at its own discretion.

Optionally, the RRC message in the embodiment may include but is not limited to at least one of the following: RRC reconfiguration message, RRC connection recovery message, RRC connection establishment message, and RRC connection reestablishment message.

S202, performing an application operation and/or a storage operation on the configuration information of each candidate cell.

In the embodiment, after the terminal acquires the configuration information of each candidate cell which is pre-configured and related to L1/L2 mobility, an application operation and/or storage operation may be performed on the configuration information of each candidate cell. The specific application operation and/or storage operation(s) to be performed can be agreed in advance, or appropriate application operation and/or storage operation(s) can be selected according to specific circumstances.

Optionally, performing application operation and/or storage operation on the configuration information of each candidate cell may specifically include one or more of the following in case of no conflict:
for any configuration information of a candidate cell among the configuration information of each candidate cell received in the RRC message, if pre-stored configuration information includes configuration information of the candidate cell, replacing the pre-stored configuration information of the candidate cell with the newly received configuration information of the candidate cell; that is, if candidate cells included in the configuration information of each candidate cell newly received overlap with candidate cell(s) included in the pre-stored configuration information of the candidate cell(s), for the overlapped candidate cell, the pre-stored old configuration information is replaced with the new configuration information; and/or
for any configuration information of a candidate cell among the configuration information of each candidate cell received in the RRC message, if pre-stored configuration information does not include the configuration information of the candidate cell, adding the configuration information of the candidate cell to the pre-stored configuration information; that is, one or some of the candidate cells included in the configuration information of each candidate cell newly received are not in the candidate cell(s) included in the pre-stored configuration information of candidate cell(s), the newly received configuration information of the one or some of the candidate cells is added to the pre-stored configuration information of the candidate cell(s); and/or
for any configuration information of a candidate cell among the configuration information of each candidate cell received in the RRC message, if it is indicated from a network to delete the candidate cell, deleting the configuration information of the candidate cell from pre-stored configuration information. That is, if the configuration information of each candidate cell includes a candidate cell deletion indication, or the terminal receives a candidate cell deletion indication from the network device, configuration information of a candidate cell corresponding to the candidate cell deletion indication is deleted from the pre-stored configuration information of candidate cell(s) according to the candidate cell deletion indication; and/or
deleting pre-stored configuration information and storing the configuration information of each candidate cell which is newly received in the RRC message. That is, all the pre-stored configuration information of candidate cell(s) is deleted, and the complete configuration information of each candidate cell is saved.

Among them, the first three operations can be regarded as modification, addition, and release based on the pre-stored configuration information of candidate cell(s), and some of them are also applicable to the situation of receiving the configuration information of each candidate cell for the first time. That is, the case where there is no pre-stored configuration information of candidate cell(s); the last operation is to delete all the old configuration information of candidate cell(s) and save the complete new configuration information of candidate cells when the terminal receives the new configuration information of candidate cells.

Optionally, the method may further include:
receiving serving cell change or addition indication information transmitted by the network device through L1 and/or L2, determining configuration information of a target serving cell corresponding to the serving cell change or addition indication information from the configuration information of each candidate cell which has been stored, and applying the configuration information of the target serving cell.

In the embodiment, based on the configuration information of each candidate cell which has been stored, if the terminal receives serving cell change or addition indication information transmitted by the network device through L1 (physical layer) and/or L2 (MAC layer), and the serving cell change or addition indication information indicates the target serving cell, the terminal can determine the configuration information of the target serving cell from the configuration information of each candidate cell which has been stored, and apply the configuration information of the target serving cell, thereby realizing the L1/L2 mobility with serving cell change.

Optionally, when performing an application operation and/or a storage operation on the configuration information of each candidate cell, the method may further include:
if the configuration information of each candidate cell includes configuration information of a current serving cell, applying the configuration information of the current serving cell in the configuration information of each candidate cell by default. That is, when the configuration information of the current serving cell is included in the configuration information of each candidate cell which is newly received, the configuration information of the current serving cell can be updated, and the old configuration information currently used by the current serving cell is replaced by the new configuration information of the current serving cell, so as to realize the application of the new configuration information of the current serving cell; or
if the configuration information of each candidate cell includes configuration information of a current serving cell, continuing applying configuration information currently used by the current serving cell by default; or
if the configuration information of each candidate cell includes configuration information of a current serving cell, determining whether to apply the configuration information of the current serving cell in the configuration information of each candidate cell according to a network indication. That is, when the configuration information of each candidate cell which is newly received includes the configuration information of the current serving cell, whether to apply the new configuration information of the current serving cell is determined according to the network indication of the network device. Specifically, if the network indication of applying the configuration information of the current serving cell is received, the configuration information of the current serving cell in the configuration information of each candidate cell is applied, that is, the new configuration information of the current serving cell replaces the old configuration information currently used by the current serving cell; if the network indication of not applying the configuration information of the current serving cell is received, or the network indication is a network indication of not applying the configuration information of the current serving cell, the old configuration information currently used by the current serving cell continues to be applied.

In another possible scenario, the RRC message transmitted by the network device includes, in addition to the configuration information of each candidate cell which is pre-configured and related to L1/L2 mobility, also serving cell change or addition indication information, and the serving cell change or addition indication information indicates a target serving cell, then performing application and/or storage operation(s) on the configuration information of each candidate cell may include, in the absence of conflict, performing the following one or more operations on the configuration information of each candidate cell:
applying common configuration information; optionally, the common configuration information may be some configuration information that does not change when the serving cell is changed, and may be determined according to the configuration information of each candidate cell; and/or
applying by default configuration information of a target serving cell corresponding to the serving cell change or addition indication information in the configuration information of each candidate cell; that is, serving cell change or addition indication information in the RRC message has indicated the target serving cell, then the configuration information of the target serving cell in the configuration information of each candidate cell is directly applied; and/or
continuing applying configuration information currently used by a current serving cell by default; that is, even if the target serving cell is indicated in the serving cell change or addition indication information in the RRC message, the configuration information of the target serving cell in the configuration information of each candidate cell is not applied, and the configuration information currently used by the current serving cell is still applied; and/or
determining whether to apply configuration information of a target serving cell corresponding to the serving cell change or addition indication information in the configuration information of each candidate cell according to a network indication; that is, whether to apply the configuration information of the target serving cell is determined according to the network indication of the network device. Optionally, if the network indication of applying the configuration information of the target serving cell is received, the configuration information of the target serving cell is applied; if the network indication of not applying the configuration information of the target serving cell is received, the configuration information of the target serving cell is not applied, but the configuration information currently used by the current serving cell continues to be applied; and/or
saving the configuration information of each candidate cell; that is, the storage operation is performed on all configuration information of candidate cells in the configuration information of each candidate cell, and the storage operation may be the same as the storage operation in the above embodiments; and/or
saving, among the configuration information of each candidate cell, configuration information of other candidate cell(s), excluding the configuration information of the target serving cell; that is, considering that there may be other ways to update the configuration information of the target serving cell, or other situations where it is not necessary to store the configuration information of the target serving cell in the configuration information of each candidate cell, thus, the storage operation can be performed only on the configuration information of other candidate cell(s), excluding the configuration information of the target serving cell, among the configuration information of each candidate cell.

Furthermore, upon receiving the serving cell change or addition indication information transmitted by the network device through L1 and/or L2, it is possible to determine the configuration information of the target serving cell corresponding to the serving cell change or addition indication information from the configuration information of each candidate cell which has been stored, and apply the configuration information of the target serving cell to achieve L1/L2 mobility with serving cell change.

On the basis of any of the above embodiments, for the configuration information of candidate cell(s) that needs to be stored, the storage operation may specifically include:
adopting a new variable to store the configuration information of each candidate cell.

Specifically, the storage operation may include one or more of the following:
storing the configuration information of each candidate cell in form of a list (list), where each entry (entry) in the list records a candidate cell and its configuration information; or
adopting multiple variables to store configuration information of different layers in the configuration information of each candidate cell, for example, adopting one variable to store the configuration information of the physical layer and another variable to store the configuration information of the MAC layer.

In the method for processing configuration information about L1/L2 mobility provided in the above embodiments, a radio resource control (RRC) message transmitted by a network device is received, where the RRC message includes configuration information of each candidate cell which is pre-configured and related to L1/L2 mobility; application and/or storage operation(s) is performed on the configuration information of each candidate cell. The application operation and/or storage operation(s) performed by the terminal on the configuration information of each candidate cell can be defined, and the specific application operation and/or storage operation(s) to be performed can be agreed in advance, or appropriate application operation and/or storage operation(s) can be selected according to specific circumstances, so as to clarify the specific behavior of the terminal after receiving the configuration information of each candidate cell which is pre-configured and related to L1/L2 mobility, and avoid the failure of serving cell change due to the incorrect application of the configuration information by the terminal.

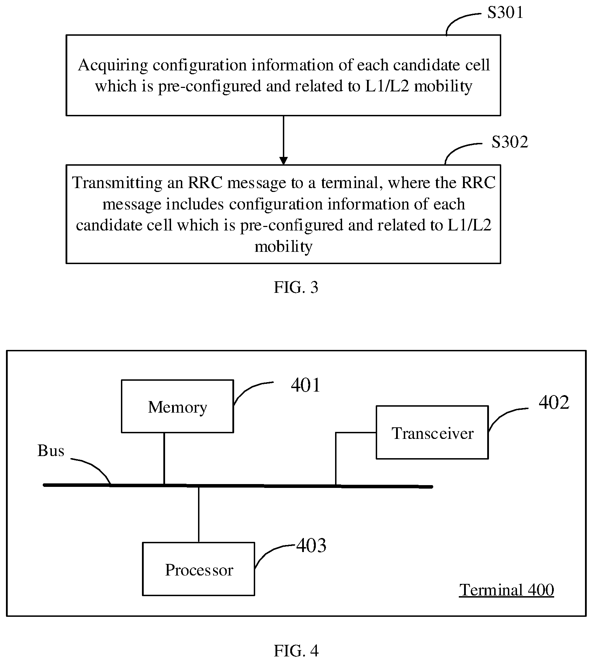

FIG. 3 is a flowchart of a method for processing configuration information about L1/L2 mobility provided in the embodiment. As shown in FIG. 3, the embodiment provides a method for processing configuration information about L1/L2 mobility, the execution entity is a network device, and the specific steps of the method are as follows:
S301: acquiring configuration information of each candidate cell which is pre-configured and related to L1/L2 mobility.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

S302: transmitting an RRC message to a terminal, where the RRC message includes configuration information of each candidate cell which is pre-configured and related to L1/L2 mobility.

The method for processing configuration information about L1/L2 mobility in the embodiment is a method embodiment on the network device side corresponding to the above embodiment, for its principle and technical effect, reference can be made to the above embodiment, which will not be repeated here.

On the basis of the above embodiment, the method further includes:
transmitting a first network indication to the terminal, where the first network indication is used to indicate whether to apply configuration information of a current serving cell in the configuration information of each candidate cell by the terminal.

In the embodiment, the network device can instruct the terminal on whether to apply the configuration information of the current serving cell in the configuration information of each candidate cell. If the network instructs to apply the configuration information of the current serving cell, the terminal applies the configuration information of the current serving cell in the configuration information of each candidate cell; or if the network instructs not to apply the configuration information of the current serving cell, the terminal continues to apply the configuration information currently used by the current serving cell.

On the basis of the above embodiment, the RRC message further includes serving cell change or addition indication information, and the serving cell change or addition indication information is used to instruct the terminal to change to a target serving cell or add a target serving cell.

On the basis of the above embodiment, the method further includes:
transmitting a second network indication to the terminal, where the second network indication is used to indicate whether to apply configuration information of the target serving cell corresponding to the serving cell change or addition indication information in the configuration information of each candidate cell by the terminal.

In the embodiment, the network device may instruct the terminal on whether to apply the configuration information of the target serving cell. If the network instructs the terminal to apply the configuration information of the target serving cell, the terminal applies the configuration information of the target serving cell corresponding to the serving cell change or addition indication information in the configuration information of each candidate cell; or if the network instructs the terminal not to apply the configuration information of the target serving cell, the terminal continues to apply the configuration information currently used by the current serving cell.

In order to further introduce the above method for processing configuration information about L1/L2 mobility, the embodiment of the present disclosure also provides the following examples for detailed illustration.

### Example 1

For the case where an RRC reconfiguration message received by a UE includes serving cell change/addition indication information and configuration information of each candidate cell which is pre-configured and related to L1/L2 mobility, the method for processing configuration information about L1/L2 mobility may specifically include the following steps:
Step 1: the UE receives an RRC reconfiguration message transmitted by a network device, where the RRC reconfiguration message includes serving cell change/addition indication information and the configuration information of each candidate cell which is pre-configured and related to L1/L2 mobility; where the serving cell change/addition indication information indicates the target serving cell.

Optionally, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

Furthermore, for different configuration information of each candidate cell, the following steps 2-1, 2-2, or 2-3 may be performed respectively.

Step 2-1: if the configuration information of each candidate cell which is pre-configured and related to L1/L2 mobility includes configuration information of a physical layer configured by the network device for each candidate cell (such as in the intra-DU scenario), the UE may perform one or more of the following application and/or storage operation(s) on the configuration information of each candidate cell:

Step 2-1-1: the UE applies common configuration information of a MAC layer, an RLC layer, and a PDCP layer (since the network device only configures configuration information of the physical layer for each candidate cell, other configuration information may remain unchanged during serving cell change, that is, the common configuration information is applied); and/or

Step 2-1-2: the UE applies pre-configured configuration information of the physical layer of a target serving cell in configuration information of each candidate cell by default; and/or

Step 2-1-3: the UE continues applying configuration information of the physical layer currently used by a current serving cell by default; and/or

Step 2-1-4: indication information is introduced into the configuration message of the network device to indicate whether to apply the pre-configured configuration information of the physical layer of the target serving cell by the UE. When the UE receives this indication information, if the indication information indicates to apply the configuration information of the target serving cell, the UE applies the pre-configured configuration information of the physical layer of the target serving cell. If the indication information indicates not to apply the configuration information of the target serving cell, the UE will not apply the pre-configured configuration information of the physical layer of the target serving cell, and may continue applying the configuration information of the physical layer currently used by the current serving cell, or apply the configuration information of the physical layer of the target serving cell from other sources; and/or

Step 2-1-5: the UE saves, among the configuration information of each candidate cell, configuration information of the physical layer of other candidate cell(s), excluding that of the target serving cell; and/or

Step 2-1-6: the UE saves all pre-configured configuration information of the physical layer of candidate cell(s) in the configuration information of each candidate cell;

Step 2-1-7: the UE performs a serving cell change/addition process.

Among them, there is no order restriction on the serving cell change/addition and the application storage of pre-configured information of the candidate cell(s) performed by the UE.

Step 2-2: if the configuration information of each candidate cell which is pre-configured and related to L1/L2 mobility includes configuration information of a physical layer, a MAC layer and an RLC layer configured by the network device for each candidate cell (such as in the inter-DU scenario), the UE may perform one or more of the following application and/or storage operation(s) on the configuration information of each candidate cell:
Step 2-2-1: the UE applies common PDCP configuration information (since the network device configures the configuration information of the physical layer, the MAC layer and the RLC layer for each candidate cell, the PDCP configuration information is common configuration information); and/or
Step 2-2-2: the UE applies pre-configured configuration information of the physical layer, the MAC layer, and the RLC layer of the target serving cell in the configuration information of each candidate cell by default; and/or
Step 2-2-3: the UE continues applying configuration information of the physical layer, the MAC layer, and the RLC layer currently used by a current serving cell by default; and/or
Step 2-2-4: indication information is introduced into the configuration message of the network device to indicate whether to apply the pre-configured configuration information of the physical layer, the MAC layer, and the RLC layer of the target serving cell by the UE. When the UE receives this indication information, if the indication information indicates to apply the configuration information of the target serving cell, the UE applies the pre-configured configuration information of the physical layer, the MAC layer, and the RLC layer of the target serving cell. If the indication information indicates not to apply the configuration information of the target serving cell, the UE will not apply the pre-configured configuration information of the physical layer, the MAC layer, and the RLC layer of the target serving cell, and may continue applying the configuration information of the physical layer, the MAC layer, and the RLC layer currently used by the current serving cell, or apply the configuration information of the physical layer, the MAC layer, and the RLC layer of the target serving cell from other sources; and/or
Step 2-2-5: the UE saves, among the configuration information of each candidate cell, configuration information of the physical layer, the MAC layer and the RLC layer of other candidate cell(s), excluding that of the target serving cell; and/or
Step 2-2-6: the UE saves all pre-configured configuration information of the physical layer, the MAC layer and the RLC layer of candidate cell(s) in the configuration information of each candidate cell;
Step 2-2-7: the UE performs a serving cell change/addition process.

Among them, there is no order restriction on the serving cell change/addition and the application storage of pre-configured information of the candidate cell(s) performed by the UE.

Step 2-3: if the configuration information of each candidate cell which is pre-configured and related to L1/L2 mobility includes configuration information of a physical layer, a MAC layer, an RLC layer and a PDCP layer configured by the network device for each candidate cell (such as in the inter-CU scenario), the UE may perform one or more of the following application and/or storage operation(s) on the configuration information of each candidate cell:
Step 2-3-1: the UE applies pre-configured configuration information of the physical layer, the MAC layer, the RLC layer and the PDCP layer of a target serving cell in the configuration information of each candidate cell by default; and/or
Step 2-3-2: the UE continues applying configuration information of the physical layer, the MAC layer, the RLC layer and the PDCP layer currently used by a current serving cell by default; and/or
Step 2-3-3: indication information is introduced into the configuration message of the network device to indicate whether to apply the pre-configured configuration information of the physical layer, the MAC layer, the RLC layer, and the PDCP layer of the target serving cell by the UE. When the UE receives this indication information, if the indication information indicates to apply the configuration information of the target serving cell, the UE applies the pre-configured configuration information of the physical layer, the MAC layer, the RLC layer, and the PDCP layer of the target serving cell. If the indication information indicates not to apply the configuration information of the target serving cell, the UE will not apply the pre-configured configuration information of the physical layer, the MAC layer, the RLC layer, and the PDCP layer of the target serving cell, and may continue applying the configuration information of the physical layer, the MAC layer, the RLC layer, and the PDCP layer currently used by the current serving cell, or apply the configuration information of the physical layer, the MAC layer, the RLC layer, and the PDCP layer of the target serving cell from other sources; and/or
Step 2-3-4: the UE saves, among the configuration information of each candidate cell, the configuration information of the physical layer, the MAC layer, the RLC layer, and the PDCP layer of other candidate cell(s), excluding that of the target service cell; and/or
Step 2-3-5: the UE saves all pre-configured configuration information of the physical layer, the MAC layer, the RLC layer, and the PDCP layer of candidate cell(s) in the configuration information of each candidate cell.
Step 2-3-6: the UE performs a serving cell change/addition process.

Among them, there is no order restriction on the serving cell change/addition and the application storage of pre-configured information of the candidate cell(s) performed by the UE.

In the above example, when performing the storage operation on the configuration information of each candidate cell, it may specifically include:
for any configuration information of a candidate cell among the configuration information of each candidate cell received in the RRC message, if pre-stored configuration information comprises configuration information of the candidate cell, replacing the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, adding the configuration information of the candidate cell to the pre-stored configuration information; and/or
for any configuration information of a candidate cell among the configuration information of each candidate cell received in the RRC message, if it is indicated from a network to delete the candidate cell, deleting the configuration information of the candidate cell from pre-stored configuration information; and/or
deleting pre-stored configuration information and storing the configuration information of each candidate cell which is newly received in the RRC message.

In the above example, the specific storage manner may include:
Manner 1: a UE variable is introduced to store the received pre-configured configuration information of each candidate cell, which can be stored in form of a list (list), that is, an entry (entry) includes a candidate cell and its configuration information. Specifically, identification information of a candidate cell can be included therein, such as PCI (Physical Cell Identity, physical layer cell identification), PCI+ frequency point, CGI (Global Cell Identity, global cell identification), etc., and one or more of configuration information of a physical layer, configuration information of a MAC layer, configuration information of an RLC layer, configuration information of a PDCP layer of this candidate cell or the like may also be included.
Manner 2: multiple UE variables are introduced to store the received pre-configured configuration information of candidate cell, that is, one UE variable is introduced for each layer, each UE variable may also be in the form of list (list), and each entry (entry) corresponds to one candidate cell and its configuration information. Specifically, the identification information of the candidate cell (PCI, PCI+ frequency, CGI, etc.) may be included, and the configuration information of the physical layer, or the configuration information of the MAC layer, or the configuration information of the RLC layer, or the configuration information of the PDCP layer corresponding to this candidate cell.

It should be noted that the above-mentioned RRC reconfiguration message may also be an RRC connection recovery message, an RRC connection establishment message, and an RRC connection reestablishment message.

Based on the above examples, furthermore, upon receiving the serving cell change or addition indication information transmitted by the network device through L1 and/or L2, it is possible to determine the configuration information of a target serving cell corresponding to the serving cell change or addition indication information from the configuration information of each candidate cell which has been stored, and apply the configuration information of the target serving cell to achieve L1/L2 mobility with serving cell change.

### Example 2

For the case where an RRC reconfiguration message includes configuration information of each candidate cell which is pre-configured and related to L1/L2 mobility but does not include serving cell change/addition indication information, the method for processing configuration information about L1/L2 mobility may specifically include the following steps:
Step 1: the UE receives the RRC reconfiguration message transmitted by the network device. The RRC reconfiguration message does not include the serving cell change/addition indication information, but includes the configuration information of each candidate cell which is pre-configured and related to L1/L2 mobility. This pre-configured configuration information of candidate cell(s) may be pre-configured configuration information of candidate cell(s) sent for the first time, or may be updated pre-configured configuration information of candidate cell(s).

Furthermore, for different configuration information of each candidate cell, the following steps 2-1, 2-2, or 2-3 may be performed respectively.

Step 2-1: if the configuration information of each candidate cell which is pre-configured and related to L1/L2 mobility includes configuration information of a physical layer configured by the network device for each candidate cell (such as in the intra-DU scenario), the UE may perform one or more of the following application and/or storage operation(s) on configuration information of each candidate cell:
Step 2-1-1: if at least one candidate cell included in the configuration information of each candidate cell received by the UE already exists in pre-stored configuration information of candidate cell(s), then for the at least one candidate cell, the UE replaces the pre-stored old configuration information of the physical layer with the newly received pre-configured configuration information of the physical layer; and/or
Step 2-1-2: if the configuration information of each candidate cell received by the UE includes a candidate cell different from that in the pre-stored configuration information of candidate cell(s), configuration information of the physical layer of this different candidate cell in the configuration information of each candidate cell is added to the pre-stored configuration information of candidate cell(s); and/or
Step 2-1-3: if the UE receives an indication from the network device side that a certain candidate cell and its configuration information of the physical layer need to be deleted, the UE deletes this candidate cell and its configuration information of the physical layer from the current pre-stored configuration information of candidate cell(s) of the UE; the above steps 2-1-1, 2-1-2, and 2-1-3 can be regarded as delta configuration based on the current pre-stored configuration information of candidate cell(s), that is, incremental addition/modification/release of configuration information; and/or
Step 2-1-4: the UE deletes all pre-stored configuration information of candidate cell(s) and stores all newly received configuration information of each candidate cell. This method can be regarded as full config, that is, complete reconfiguration. When receiving the new configuration information, the UE will delete all the old configuration information and save the complete new configuration information; and/or
Step 2-1-5: the UE applies the configuration information of the physical layer of a current serving cell in the received configuration information of each candidate cell by default, that is, updates the configuration information of the physical layer of the current serving cell; and/or
Step 2-1-6: the UE continues applying the configuration information of the physical layer currently used by the current serving cell by default; or
Step 2-1-7: indication information is introduced into the configuration message of network to indicate whether to update the configuration information of the physical layer of the current serving cell by the UE. When the UE receives this indication information, if the indication information indicates to apply the configuration information of the current serving cell, the UE will replace the configuration information of the physical layer currently used by the current serving cell with the newly received configuration information of the physical layer corresponding to the current serving cell; if the indication information indicates not to apply the configuration information of the current serving cell, the UE continues applying the configuration information of the physical layer currently used by the current serving cell.

Step 2-2: if the configuration information of each candidate cell which is pre-configured and related to L1/L2 mobility includes configuration information of a physical layer, a MAC layer and an RLC layer configured by the network device for each candidate cell (such as in the intra-DU scenario), the UE may perform one or more of the following application and/or storage operation(s) on configuration information of each candidate cell:
Step 2-2-1: if at least one candidate cell included in the configuration information of each candidate cell received by the UE already exists in pre-stored configuration information of candidate cell(s), then for the at least one candidate cell, the UE replaces the pre-stored old configuration information of the physical layer, the MAC layer and the RLC layer with the newly received pre-configured configuration information of the physical layer, the MAC layer and the RLC layer; and/or
Step 2-2-2: if the configuration information of each candidate cell received by the UE includes a candidate cell different from that in the pre-stored configuration information of candidate cell(s), configuration information of the physical layer, the MAC layer and the RLC layer of this different candidate cell in the configuration information of each candidate cell is added to the pre-stored configuration information of candidate cell(s); and/or
Step 2-2-3: if the UE receives an indication from the network device side that a certain candidate cell and its configuration information of the physical layer, the MAC layer and the RLC layer need to be deleted, the UE deletes this candidate cell and its configuration information of the physical layer, the MAC layer and the RLC layer from the current pre-stored configuration information of candidate cell(s) of the UE; the above steps 2-2-1, 2-2-2, and 2-2-3 can be regarded as delta configuration based on the current pre-stored configuration information of candidate cell(s), that is, incremental addition/modification/release of configuration information; and/or
Step 2-2-4: the UE deletes all pre-stored configuration information of candidate cell(s) and stores all newly received configuration information of each candidate cell. This method can be regarded as full con fig, that is, complete reconfiguration. When receiving the new configuration information, the UE will delete all the old configuration information and save the complete new configuration information; and/or
Step 2-2-5: the UE applies the configuration information of the physical layer, the MAC layer and the RLC layer of a current serving cell in the received configuration information of each candidate cell by default, that is, updates the configuration information of the physical layer, the MAC layer and the RLC layer of the current serving cell; and/or
Step 2-2-6: the UE continues applying the configuration information of the physical layer, the MAC layer and the RLC layer currently used by the current serving cell by default; or
Step 2-2-7: indication information is introduced into the configuration message of network to indicate whether to update the configuration information of the physical layer, the MAC layer and the RLC layer of the current serving cell by the UE. When the UE receives this indication information, if the indication information indicates to apply the configuration information of the current serving cell, the UE will replace the configuration information of the physical layer, the MAC layer and the RLC layer currently used by the current serving cell with the newly received configuration information of the physical layer, the MAC layer and the RLC layer corresponding to the current serving cell; if the indication information indicates not to apply the configuration information of the current serving cell, the UE continues applying the configuration information of the physical layer, the MAC layer and the RLC layer currently used by the current serving cell.

Step 2-3: if the configuration information of each candidate cell which is pre-configured and related to L1/L2 mobility includes configuration information of a physical layer, a MAC layer, an RLC layer and a PDCP layer configured by the network device for each candidate cell (such as in the inter-CU scenario), the UE may perform one or more of the following application and/or storage operation(s) on configuration information of each candidate cell:
Step 2-3-1: if at least one candidate cell included in the configuration information of each candidate cell received by the UE already exists in the pre-stored configuration information of candidate cell(s), then for the at least one candidate cell, the UE replaces the pre-stored old configuration information of the physical layer, the MAC layer, the RLC layer and the PDCP layer with the newly received pre-configured configuration information of the physical layer, the MAC layer, the RLC layer and the PDCP layer; and/or
Step 2-3-2: if the configuration information of each candidate cell received by the UE includes a candidate cell different from that in the pre-stored configuration information of candidate cell(s), configuration information of the physical layer, the MAC layer, the RLC layer and the PDCP layer of this different candidate cell in the configuration information of each candidate cell is added to the pre-stored configuration information of candidate cell(s); and/or
Step 2-3-3: if the UE receives an indication from the network device side that a certain candidate cell and its configuration information of the physical layer, the MAC layer, the RLC layer and the PDCP layer need to be deleted, the UE deletes this candidate cell and its configuration information of the physical layer, the MAC layer, the RLC layer and the PDCP layer from the current pre-stored configuration information of candidate cell(s) of the UE; the above steps 2-2-1, 2-2-2, and 2-2-3 can be regarded as delta configuration based on the current pre-stored configuration information of candidate cell(s), that is, incremental addition/modification/release of configuration information; and/or
Step 2-3-4: the UE deletes all pre-stored configuration information of candidate cell(s) and stores all newly received configuration information of each candidate cell. This method can be regarded as full con fig, that is, complete reconfiguration. When receiving the new configuration information, the UE will delete all the old configuration information and save the complete new configuration information; and/or
Step 2-3-5: the UE applies the configuration information of the physical layer, the MAC layer, the RLC layer and the PDCP layer of a current serving cell in the received configuration information of each candidate cell by default, that is, updates the configuration information of the physical layer, the MAC layer, the RLC layer and the PDCP layer of the current serving cell; and/or
Step 2-3-6: the UE continues applying the configuration information of the physical layer, the MAC layer, the RLC layer and the PDCP layer currently used by the current serving cell by default; or
Step 2-3-7: indication information is introduced into the configuration message of network to indicate whether to update the configuration information of the physical layer, the MAC layer, the RLC layer and the PDCP layer of the current serving cell by the UE. When the UE receives this indication information, if the indication information indicates to apply the configuration information of the current serving cell, the UE will replace the configuration information of the physical layer, the MAC layer, the RLC layer and the PDCP layer currently used by the current serving cell with the newly received configuration information of the physical layer, the MAC layer, the RLC layer and the PDCP layer corresponding to the current serving cell; if the indication information indicates not to apply the configuration information of the current serving cell, the UE continues applying the configuration information of the physical layer, the MAC layer, the RLC layer and the PDCP layer currently used by the current serving cell.

After step 2-1, the following steps 3-1, 3-2, or 3-3 can be performed respectively for different configuration information of each candidate cell.

Step 3-1: when the UE receives an L1/L2 serving cell change/addition command or an L3 serving cell change/addition command transmitted by the network device, that is, moving from one cell to another cell or adding a service cell, the UE will execute the serving cell change/addition command and apply the stored pre-configured configuration information of the physical layer corresponding to the target serving cell. For example, when the UE receives an L1/L2 mobility command transmitted by the network device to move from cell A to cell B, the UE will execute the L1/L2 mobility command, that is, move from cell A to cell B, and apply the stored pre-configured configuration information of the physical layer corresponding to cell B. There is no order restriction on the UE's execution of the mobility command and application of the pre-configured configuration information of the physical layer corresponding to the target serving cell, that is, the order is not limited.

Step 3-2: when the UE receives an L1/L2 serving cell change/addition command or an L3 serving cell change/addition command transmitted by the network device, that is, moving from one cell to another cell or adding a service cell, the UE will execute the serving cell change/addition command and apply the stored pre-configured configuration information of the physical layer, the MAC layer, and the RLC layer corresponding to the target serving cell. For example, when the UE receives an L1/L2 mobility command transmitted by the network device to move from cell A to cell B, the UE will execute the L1/L2 mobility command, that is, move from cell A to cell B, and apply the stored pre-configured configuration information of the physical layer, the MAC layer, and the RLC layer corresponding to cell B. There is no order restriction on the UE's execution of the mobility command and application of the pre-configured configuration information of the physical layer, the MAC layer, and the RLC layer corresponding to the target serving cell, that is, the order is not limited.

Step 3-3: when the UE receives an L1/L2 serving cell change/addition command or an L3 serving cell change/addition command transmitted by the network device, that is, moving from one cell to another cell or adding a service cell, the UE will execute the serving cell change/addition command and apply the stored pre-configured configuration information of the physical layer, the MAC layer, the RLC layer and the PDCP layer corresponding to the target serving cell. For example, when the UE receives an L1/L2 mobility command transmitted by the network device to move from cell A to cell B, the UE will execute the L1/L2 mobility command, that is, move from cell A to cell B, and apply the stored pre-configured configuration information of the physical layer, the MAC layer, the RLC layer and the PDCP layer corresponding to cell B. There is no order restriction on the UE's execution of the mobility command and application of the pre-configured configuration information of the physical layer, the MAC layer, the RLC layer and the PDCP layer corresponding to the target serving cell, that is, the order is not limited.

In the above example, when performing the storage operation on configuration information of each candidate cell, it may specifically include:
for any configuration information of a candidate cell among the configuration information of each candidate cell received in the RRC message, if pre-stored configuration information comprises configuration information of the candidate cell, replacing the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, adding the configuration information of the candidate cell to the pre-stored configuration information; and/or
for any configuration information of a candidate cell among the configuration information of each candidate cell received in the RRC message, if it is indicated from a network to delete the candidate cell, deleting the configuration information of the candidate cell from pre-stored configuration information; and/or
deleting pre-stored configuration information and storing the configuration information of each candidate cell which is newly received in the RRC message.

In the above example, the specific storage manner may include:
Manner 1: a UE variable is introduced to store the received pre-configured configuration information of each candidate cell, which can be stored in form of a list (list), that is, an entry (entry) includes a candidate cell and its configuration information. Specifically, identification information of a candidate cell can be included therein, such as PCI (Physical Cell Identity, physical layer cell identification), PCI+ frequency point, CGI (Global Cell Identity, global cell identification), etc., and one or more of configuration information of a physical layer, configuration information of a MAC layer, configuration information of an RLC layer, configuration information of a PDCP layer of this candidate cell or the like may also be included.
Manner 2: multiple UE variables are introduced to store the received pre-configured configuration information of candidate cell, that is, one UE variable is introduced for each layer, each UE variable may also be in the form of list (list), and each entry (entry) corresponds to one candidate cell and its configuration information. Specifically, the identification information of the candidate cell (PCI, PCI+ frequency, CGI, etc.) may be included, and the configuration information of the physical layer, or the configuration information of the MAC layer, or the configuration information of the RLC layer, or the configuration information of the PDCP layer corresponding to this candidate cell.

It should be noted that the above-mentioned RRC reconfiguration message may also be an RRC connection recovery message, an RRC connection establishment message, and an RRC connection reestablishment message.

### Example 3

In this example, the network device configures multiple sets of configuration information for each candidate cell, including at least two of the following:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

The UE may receive a network indication from the network device, and the terminal may select configuration information according to the network indication to execute the application operation and/or a storage operation in the above embodiment; or
the UE may also independently determine and select configuration information to execute the application and/or storage operation(s) in the above embodiments.

FIG. 4 is a structural diagram of a terminal provided in an embodiment of the present disclosure. The terminal provided in the embodiment may execute the processing procedure provided in the method embodiments. As shown in FIG. 4, the terminal 400 includes a memory 401, a transceiver 402 and a processor 403.

Among them, in FIG. 4, a bus architecture may include any number of interconnected buses and bridges. Specifically, one or more processors represented by processor 403 and various circuits of memory represented by memory 401 are linked together. The bus architecture may also link various other circuits, such as peripheral devices, voltage regulators and power management circuits, which are well known in the art, so they will not be further described here. The bus interface provides the interface. The transceiver 402 may be a plurality of components, i.e., a transmitter and a receiver, and provides a unit for communicating with various other apparatuses over a transmission medium, such as a wireless channel, a wired channel, an optical cable, etc. The processor 403 is responsible for managing the bus architecture and general processing, and the memory 401 may store data used by the processor 403 when performing operations.

The processor 403 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The memory 401 is configured to store a computer program; the transceiver 402 is configured to transmit and receive data under control of the processor 403; the processor 403 is configured to read the computer program in the memory 401 and perform the following operations:
controlling the transceiver to receive a radio resource control RRC message transmitted by a network device, where the RRC message includes configuration information of each candidate cell which is pre-configured and related to L1/L2 mobility; and
performing an application operation and/or a storage operation on the configuration information of each candidate cell.

In one or more embodiments of the present disclosure, when performing an application operation and/or a storage operation on configuration information of each candidate cell, the processor 403 is configured to:
for any configuration information of a candidate cell among the configuration information of each candidate cell received in the RRC message, if pre-stored configuration information comprises configuration information of the candidate cell, replace the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, add the configuration information of the candidate cell to the pre-stored configuration information; and/or
for any configuration information of a candidate cell among the configuration information of each candidate cell received in the RRC message, if it is indicated from a network to delete the candidate cell, delete the configuration information of the candidate cell from pre-stored configuration information; and/or
delete pre-stored configuration information and storing the configuration information of each candidate cell which is newly received in the RRC message.

In one or more embodiments of the present disclosure, when performing an application operation and/or a storage operation on configuration information of each candidate cell, the processor 403 is configured to:
if the configuration information of each candidate cell comprises configuration information of a current serving cell, apply the configuration information of the current serving cell in the configuration information of each candidate cell by default; or
if the configuration information of each candidate cell comprises configuration information of a current serving cell, continue applying configuration information currently used by the current serving cell by default; or
if the configuration information of each candidate cell comprises configuration information of a current serving cell, determine whether to apply the configuration information of the current serving cell in the configuration information of each candidate cell according to a network indication.

In one or more embodiments of the present disclosure, when determining whether to apply the configuration information of the current serving cell in the configuration information of each candidate cell according to a network indication, the processor 403 is configured to:
if the network indication of applying the configuration information of the current serving cell is received, apply the configuration information of the current serving cell in the configuration information of each candidate cell; or
if the network indication of not applying the configuration information of the current serving cell is received, continue applying the configuration information currently used by the current serving cell.

In one or more embodiments of the present disclosure, when performing an application operation and/or a storage operation on configuration information of each candidate cell, the processor 403 is configured to:
if the RRC message further includes serving cell change or addition indication information, perform one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

In one or more embodiments of the present disclosure, when determining whether to apply configuration information of a target serving cell corresponding to the serving cell change or addition indication information in the configuration information of each candidate cell according to a network indication, the processor 403 is configured to:
if the network indication of applying the configuration information of the target serving cell is received, apply the configuration information of the target serving cell corresponding to the serving cell change or addition indication information in the configuration information of each candidate cell; or
if the network indication of not applying the configuration information of the target serving cell is received, continue applying the configuration information currently used by a current serving cell.

In one or more embodiments of the present disclosure, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

In one or more embodiments of the present disclosure, the processor 403 is further configured to:
control the transceiver to receive serving cell change or addition indication information transmitted by the network device through L1 and/or L2, determine configuration information of a target serving cell corresponding to the serving cell change or addition indication information from the configuration information of each candidate cell stored, and apply the configuration information of the target serving cell.

In one or more embodiments of the present disclosure, the storage operation performed by the processor 403 includes:
adopting a new variable to store the configuration information of each candidate cell.

In one or more embodiments of the present disclosure, when adopting a new variable to store the configuration information of each candidate cell, the processor 403 is configured for one or more of the following:
storing the configuration information of each candidate cell in form of a list, where each entry in the list records a candidate cell and configuration information of the candidate cell; or
adopting multiple variables to store configuration information of different layers in the configuration information of each candidate cell.

The terminal provided in the embodiments of the present disclosure can be specifically configured to execute the method embodiments on the terminal side, and the specific functions are not repeated here.

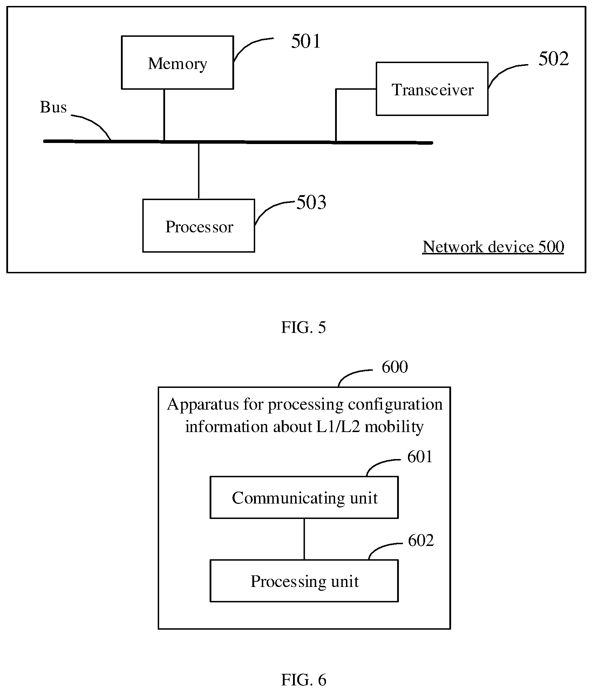

FIG. 5 is a structural diagram of a network device provided in an embodiment of the present disclosure. The network device provided in the embodiment can execute the processing procedure provided in the method embodiments on the network device side. As shown in FIG. 5, the network device 500 includes a memory 501, a transceiver 502, and a processor 503.

Among them, in FIG. 5, a bus architecture may include any number of interconnected buses and bridges. Specifically, one or more processors represented by processor 503 and various circuits of memory represented by memory 501 are linked together. The bus architecture may also link various other circuits, such as peripheral devices, voltage regulators and power management circuits, which are well known in the art, so they will not be further described here. The bus interface provides the interface. The transceiver 502 may be a plurality of components, i.e., a transmitter and a receiver, and provides a unit for communicating with various other apparatuses over a transmission medium, such as a wireless channel, a wired channel, an optical cable, etc. The processor 503 is responsible for managing the bus architecture and general processing, and the memory 501 may store data used by the processor 503 when performing operations.

The processor 503 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The memory 501 is configured to store a computer program; the transceiver 502 is configured to transmit and receive data under control of the processor 503; the processor 503 is configured to read the computer program in the memory 501 and perform the following operations:
acquiring configuration information of each candidate cell which is pre-configured and related to L1/L2 mobility;
controlling the transceiver to transmit an RRC message to a terminal, where the RRC message includes configuration information of each candidate cell which is pre-configured and related to L1/L2 mobility.

In one or more embodiments of the present disclosure, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

In one or more embodiments of the present disclosure, the processor 503 is further configured to:
control the transceiver to transmit a first network indication to the terminal, where the first network indication is used to indicate whether to apply configuration information of a current serving cell in the configuration information of each candidate cell by the terminal.

In one or more embodiments of the present disclosure, the RRC message further includes serving cell change or addition indication information, and the serving cell change or addition indication information is used to instruct the terminal to change to a target serving cell or add a target serving cell.

In one or more embodiments of the present disclosure, the processor 503 is further configured to:
control the transceiver to transmit a second network indication to the terminal, where the second network indication is used to indicate whether to apply configuration information of the target serving cell corresponding to the serving cell change or addition indication information in the configuration information of each candidate cell by the terminal.

The network device provided in embodiments of the present disclosure can be specifically configured to execute the method embodiments on the network device side described above, and the specific functions will not be repeated here.

FIG. 6 is a structural diagram of an apparatus for processing configuration information about L1/L2 mobility provided an embodiment of the present disclosure. The apparatus for processing configuration information about L1/L2 mobility provided in the embodiment can execute the processing flow provided by the method embodiments on the terminal side. As shown in FIG. 6, the apparatus 600 for processing configuration information about L1/L2 mobility includes a communicating unit 601 and a processing unit 602.

The communicating unit 601 is configured to receive a radio resource control RRC message transmitted by a network device, where the RRC message includes configuration information of each candidate cell which is pre-configured and related to L1/L2 mobility;
the processing unit 602 is configured to perform an application operation and/or a storage operation on the configuration information of each candidate cell.

In one or more embodiments of the present disclosure, when performing an application operation and/or a storage operation on configuration information of each candidate cell, the processing unit 602 is configured to:
for any configuration information of a candidate cell among the configuration information of each candidate cell received in the RRC message, if pre-stored configuration information comprises configuration information of the candidate cell, replace the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, add the configuration information of the candidate cell to the pre-stored configuration information; and/or
for any configuration information of a candidate cell among the configuration information of each candidate cell received in the RRC message, if it is indicated from a network to delete the candidate cell, delete the configuration information of the candidate cell from pre-stored configuration information; and/or
delete pre-stored configuration information and storing the configuration information of each candidate cell which is newly received in the RRC message.

In one or more embodiments of the present disclosure, when performing an application operation and/or a storage operation on configuration information of each candidate cell, the processing unit 602 is configured to:
if the configuration information of each candidate cell comprises configuration information of a current serving cell, apply the configuration information of the current serving cell in the configuration information of each candidate cell by default; or
if the configuration information of each candidate cell comprises configuration information of a current serving cell, continue applying configuration information currently used by the current serving cell by default; or
if the configuration information of each candidate cell comprises configuration information of a current serving cell, determine whether to apply the configuration information of the current serving cell in the configuration information of each candidate cell according to a network indication.

In one or more embodiments of the present disclosure, when determining whether to apply the configuration information of the current serving cell in the configuration information of each candidate cell according to a network indication, the processing unit 602 is configured to:
if the network indication of applying the configuration information of the current serving cell is received, apply the configuration information of the current serving cell in the configuration information of each candidate cell; or
if the network indication of not applying the configuration information of the current serving cell is received, continue applying the configuration information currently used by the current serving cell.

In one or more embodiments of the present disclosure, when performing an application operation and/or a storage operation on configuration information of each candidate cell, the processing unit 602 is configured to:
if the RRC message further includes serving cell change or addition indication information, perform one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

In one or more embodiments of the present disclosure, when determining whether to apply configuration information of a target serving cell corresponding to the serving cell change or addition indication information in the configuration information of each candidate cell according to a network indication, the processing unit 602 is configured to:
if the network indication of applying the configuration information of the target serving cell is received, apply the configuration information of the target serving cell corresponding to the serving cell change or addition indication information in the configuration information of each candidate cell; or
if the network indication of not applying the configuration information of the target serving cell is received, continue applying the configuration information currently used by a current serving cell.

In one or more embodiments of the present disclosure, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

In one or more embodiments of the present disclosure, the communicating unit 601 is further configured to receive serving cell change or addition indication information transmitted by the network device through L1 and/or L2;
the processing unit 602 is further configured to determine configuration information of a target serving cell corresponding to the serving cell change or addition indication information from the configuration information of each candidate cell stored, and apply the configuration information of the target serving cell.

In one or more embodiments of the present disclosure, the storage operation performed by the processing unit 602 includes:
adopting a new variable to store the configuration information of each candidate cell.

In one or more embodiments of the present disclosure, when adopting a new variable to store the configuration information of each candidate cell, the processing unit 602 is configured for one or more of the following:
storing the configuration information of each candidate cell in form of a list, where each entry in the list records a candidate cell and configuration information of the candidate cell; or
adopting multiple variables to store configuration information of different layers in the configuration information of each candidate cell.

The apparatus for processing configuration information about L1/L2 mobility provided in the embodiments of the present disclosure can be specifically configured to execute the above-mentioned method embodiments on the terminal side, and the specific functions are not repeated here.

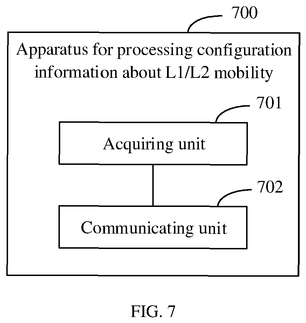

FIG. 7 is a structural diagram of an apparatus for processing configuration information about L1/L2 mobility provided in the embodiment of the present disclosure. The apparatus for processing configuration information about L1/L2 mobility provided in the embodiment can execute the processing flow provided by the method embodiments on the network device side. As shown in FIG. 7, the apparatus 700 for processing configuration information about L1/L2 mobility includes an acquiring unit 701 and a communicating unit 702.

The acquiring unit 701 is configured to acquire configuration information of each candidate cell which is pre-configured and related to L1/L2 mobility;
the communicating unit 702 is configured to transmit an RRC message to a terminal, where the RRC message includes configuration information of each candidate cell which is pre-configured and related to L1/L2 mobility.

In one or more embodiments of the present disclosure, the configuration information of each candidate cell includes at least one of the following configuration information:
first configuration information corresponding to each candidate cell, where the first configuration information includes configuration information of a physical layer;
second configuration information corresponding to each candidate cell, where the second configuration information includes configuration information of a physical layer, a MAC layer and an RLC layer;
third configuration information corresponding to each candidate cell, where the third configuration information includes configuration information of a physical layer, a MAC layer, an RLC layer and a PDCP layer.

In one or more embodiments of the present disclosure, the communicating unit 702 is further configured to:
transmit a first network indication to the terminal, where the first network indication is used to indicate whether to apply configuration information of a current serving cell in the configuration information of each candidate cell by the terminal.

In one or more embodiments of the present disclosure, the RRC message further includes serving cell change or addition indication information, and the serving cell change or addition indication information is used to instruct the terminal to change to a target serving cell or add a target serving cell.

In one or more embodiments of the present disclosure, the communicating unit 702 is further configured to:
transmit a second network indication to the terminal, where the second network indication is used to indicate whether to apply configuration information of the target serving cell corresponding to the serving cell change or addition indication information in the configuration information of each candidate cell by the terminal.

The apparatus for processing configuration information about L1/L2 mobility provided by the embodiments of the present disclosure can be specifically configured to execute the method embodiments on the network device side, and the specific functions are not described here.

It should be noted that the division of units in the above embodiments of the present disclosure is schematic and is only a logical function division. There may be other division methods in actual implementation. In addition, the functional units in the various embodiments of the present disclosure may be integrated into a processing unit, or each unit may exist physically separately, or two or more units may be integrated into one unit. The above integrated units may be implemented in the form of hardware or in the form of software functional units.

When the integrated units are implemented in the form of software functional units and sold or used as independent products, they may be stored in a processor-readable storage medium. Based on this understanding, the technical solutions of the present application essentially, or the part contributing to the prior art, or all or a part of the technical solutions may be embodied in a form of a software product. The computer software product is stored in a storage medium, including several instructions for enabling a computer device (which may be a personal computer, a server, or a network device, etc.) or a processor (processor) to execute all or part of the steps of the method described in each embodiment of the present disclosure. The aforementioned storage medium includes: any medium capable of storing program codes, such as a USB flash disk, a mobile hard disk, a read-only memory (Read-Only Memory, ROM), a random access memory (Random Access Memory, RAM), a magnetic disk, or an optical disc.

Another embodiment of the present disclosure also provides a computer-readable storage medium. The computer-readable storage medium stores a computer program, and the computer program is used to enable a processor to execute the above-mentioned method for processing configuration information about L1/L2 mobility on the terminal side or network device side.

Among them, the computer-readable storage medium can be any available medium or data storage device accessible to the processor, including but not limited to a magnetic memory (such as a floppy disk, a hard disk, a tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state drive (SSD)), etc.

Another embodiment of the present disclosure also provides a computer program product, including a computer program, and the computer program is used to enable a processor to execute the above-mentioned method for processing configuration information about L1/L2 mobility on the terminal side or network device side.

Those skilled in the art should understand that the embodiments of the present disclosure may be provided as methods, systems, or computer program products. Accordingly, the present disclosure may take the form of complete hardware embodiments, complete software embodiments, or a combination of software and hardware embodiments. Further, the present disclosure may take the form of computer program products implemented on one or more computer-usable storage media (including but not limited to disk memories and optical memories, etc.) containing computer-usable program codes.

The present disclosure is described with reference to flow charts and/or block diagrams of a method, a device (system) and a computer program product according to embodiments of the present disclosure. It will be appreciated that computer-executable instructions can implement each flow and/or block in the flow charts and/or the block diagrams, and a combination of a flow and/or a block in the flow charts and/or the block diagrams. These computer-executable instructions may be provided to a processor of a general purpose computer, a special purpose computer, an embedded processor or other programmable data processing devices to generate a machine, so that instructions executed by the processor of the computers or other programmable data processing devices generate a device for performing functions specified in one or more flows of the flow charts and/or one or more blocks of the block diagrams.

These processor-executable instructions may also be stored in a processor-readable memory capable of directing the computers or other programmable data processing devices to operate in a specific manner, so that instructions stored in the processor-readable memory generate a manufactured product including an instruction device, where the instruction device performs functions specified in one or more flows of the flow charts and/or one or more blocks of the block diagrams.

These processor-executable instructions may also be loaded on the computers or other programmable data processing devices, so that a series of operation steps are performed in the computers or other programmable devices to generate a computed implemented process, and thus the instructions executed on the computers or other programmable devices provide steps for performing the functions specified in one or more flows of the flow charts and/or one or more blocks of the block diagrams.

Apparently, those skilled in the art can make various modifications and variations to the present disclosure without departing from the spirit and the scope of the present disclosure. Thus, if these modifications and variations of the present disclosure fall into the scope of the claims of the present disclosure and equivalent technologies thereof, then the present disclosure is also intended to include these modifications and variations.

## Claims

1. A method for processing configuration information about layer 1/layer 2 L1/L2 mobility, applying to a terminal and being **characterized by** comprising:
receiving a radio resource control RRC message transmitted by a network device, wherein the RRC message comprises configuration information of each candidate cell pre-configured and related to L1/L2 mobility;
performing an application operation and/or a storage operation on the configuration information of each candidate cell.

2. The method according to claim 1, wherein the performing an application operation and/or a storage operation on the configuration information of each candidate cell comprises:
for any configuration information of a candidate cell among the configuration information of each candidate cell received in the RRC message, if pre-stored configuration information comprises configuration information of the candidate cell, replacing the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, adding the configuration information of the candidate cell to the pre-stored configuration information; and/or
for any configuration information of a candidate cell among the configuration information of each candidate cell received in the RRC message, if it is indicated from a network to delete the candidate cell, deleting the configuration information of the candidate cell from pre-stored configuration information; and/or
deleting pre-stored configuration information and storing the configuration information of each candidate cell which is newly received in the RRC message.

3. The method according to claim 2, wherein the performing an application operation and/or a storage operation on the configuration information of each candidate cell comprises:
if the configuration information of each candidate cell comprises configuration information of a current serving cell, applying the configuration information of the current serving cell in the configuration information of each candidate cell by default; or
if the configuration information of each candidate cell comprises configuration information of a current serving cell, continuing applying configuration information currently used by the current serving cell by default; or
if the configuration information of each candidate cell comprises configuration information of a current serving cell, determining whether to apply the configuration information of the current serving cell in the configuration information of each candidate cell according to a network indication.

4. The method according to claim 3, wherein the determining whether to apply the configuration information of the current serving cell in the configuration information of each candidate cell according to a network indication comprises:
if the network indication of applying the configuration information of the current serving cell is received, applying the configuration information of the current serving cell in the configuration information of each candidate cell; or
if the network indication of not applying the configuration information of the current serving cell is received, continuing applying the configuration information currently used by the current serving cell.

5. The method according to claim 1, wherein the performing an application operation and/or a storage operation on the configuration information of each candidate cell comprises:
if the RRC message further comprises serving cell change or addition indication information, performing one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

6. The method according to claim 5, wherein the determining whether to apply configuration information of a target serving cell corresponding to the serving cell change or addition indication information in the configuration information of each candidate cell according to a network indication comprises:
if the network indication of applying the configuration information of the target serving cell is received, applying the configuration information of the target serving cell corresponding to the serving cell change or addition indication information in the configuration information of each candidate cell; or
if the network indication of not applying the configuration information of the target serving cell is received, continuing applying configuration information currently used by a current serving cell.

7. The method according to any one of claims 1 to 6, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

8. The method according to any one of claims 1 to 6, wherein the method further comprises:
receiving serving cell change or addition indication information transmitted by the network device through L1 and/or L2, determining configuration information of a target serving cell corresponding to the serving cell change or addition indication information from the configuration information of each candidate cell stored, and applying the configuration information of the target serving cell.

9. The method according to any one of claims 1 to 6, wherein the storage operation comprises:
adopting a new variable to store the configuration information of each candidate cell.

10. The method according to claim 9, wherein the adopting a new variable to store the configuration information of each candidate cell comprises one or more of the following:
storing the configuration information of each candidate cell in form of a list, wherein each entry in the list records a candidate cell and configuration information of the candidate cell; or
adopting multiple variables to store configuration information of different layers in the configuration information of each candidate cell.

11. A method for processing configuration information about L1/L2 mobility, applied to a network device and being **characterized by** comprising:
acquiring configuration information of each candidate cell pre-configured and related to L1/L2 mobility;
transmitting an RRC message to a terminal, wherein the RRC message comprises the configuration information of each candidate cell pre-configured and related to L1/L2 mobility.

12. The method according to claim 11, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

13. The method according to claim 11, further comprising:
transmitting a first network indication to the terminal, wherein the first network indication is used to indicate whether to apply configuration information of a current serving cell in the configuration information of each candidate cell by the terminal.

14. The method according to claim 11, wherein the RRC message further comprises serving cell change or addition indication information, and the serving cell change or addition indication information is used to instruct the terminal to change to a target serving cell or add a target serving cell.

15. The method according to claim 14, further comprising:
transmitting a second network indication to the terminal, wherein the second network indication is used to indicate whether to apply configuration information of the target serving cell corresponding to the serving cell change or addition indication information in the configuration information of each candidate cell by the terminal.

16. A terminal, **characterized by** comprising a memory, a transceiver, and a processor;
the memory is configured to store a computer program; the transceiver is configured to transmit and receive data under control of the processor;
the processor is configured to read the computer program in the memory and perform following operations:
controlling the transceiver to receive a radio resource control RRC message transmitted by a network device, wherein the RRC message comprises configuration information of each candidate cell pre-configured and related to L1/L2 mobility;
performing an application operation and/or a storage operation on the configuration information of each candidate cell.

17. The terminal according to claim 16, wherein when performing an application operation and/or a storage operation on the configuration information of each candidate cell, the processor is configured to:
for configuration information of at least one candidate cell among the configuration information of each candidate cell received in the RRC message, if pre-stored configuration information comprises configuration information of the candidate cell, replace the pre-stored configuration information of the candidate cell with the newly received configuration information of the candidate cell; and/or
for configuration information of at least one candidate cell among the configuration information of each candidate cell received in the RRC message, if pre-stored configuration information does not comprise the configuration information of the candidate cell, add the configuration information of the candidate cell to the pre-stored configuration information; and/or
for any configuration information of a candidate cell among the configuration information of each candidate cell received in the RRC message, if it is indicated from a network to delete the candidate cell, delete the configuration information of the candidate cell from pre-stored configuration information; and/or
delete pre-stored configuration information and storing the configuration information of each candidate cell which is newly received in the RRC message.

18. The terminal according to claim 17, wherein when performing an application operation and/or a storage operation on the configuration information of each candidate cell, the processor is configured to:
if the configuration information of each candidate cell comprises configuration information of a current serving cell, apply the configuration information of the current serving cell in the configuration information of each candidate cell by default; or
if the configuration information of each candidate cell comprises configuration information of a current serving cell, continue applying configuration information currently used by the current serving cell by default; or
if the configuration information of each candidate cell comprises configuration information of a current serving cell, determine whether to apply the configuration information of the current serving cell in the configuration information of each candidate cell according to a network indication.

19. The terminal according to claim 18, wherein when determining whether to apply the configuration information of the current serving cell in the configuration information of each candidate cell according to a network indication, the processor is configured to:
if the network indication of applying the configuration information of the current serving cell is received, apply the configuration information of the current serving cell in the configuration information of each candidate cell; or
if the network indication of not applying the configuration information of the current serving cell is received, continue applying the configuration information currently used by the current serving cell.

20. The terminal according to claim 16, wherein when performing an application operation and/or a storage operation on the configuration information of each candidate cell, the processor is configured to:
if the RRC message further comprises serving cell change or addition indication information, perform one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

21. The terminal according to claim 20, wherein when determining whether to apply configuration information of a target serving cell corresponding to the serving cell change or addition indication information in the configuration information of each candidate cell according to a network indication, the processor is configured to:
if the network indication of applying the configuration information of the target serving cell is received, apply the configuration information of the target serving cell corresponding to the serving cell change or addition indication information in the configuration information of each candidate cell; or
if the network indication of not applying the configuration information of the target serving cell is received, continue applying the configuration information currently used by a current serving cell.

22. The terminal according to any one of claims 16 to 21, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

23. The terminal according to any one of claims 16 to 21, wherein the processor is further configured to:
control the transceiver to receive serving cell change or addition indication information transmitted by the network device through L1 and/or L2, determine configuration information of a target serving cell corresponding to the serving cell change or addition indication information from the configuration information of each candidate cell stored, and apply the configuration information of the target serving cell.

24. The terminal according to any one of claims 16 to 21, wherein the storage operation performed by the processor comprises:
adopting a new variable to store the configuration information of each candidate cell.

25. The terminal according to claim 24, wherein when adopting a new variable to store the configuration information of each candidate cell, the processor is configured for one or more of the following:
storing the configuration information of each candidate cell in form of a list, wherein each entry in the list records a candidate cell and configuration information of the candidate cell; or
adopting multiple variables to store configuration information of different layers in the configuration information of each candidate cell.

26. A network device, **characterized by** comprising a memory, a transceiver, and a processor;
the memory is configured to store a computer program; the transceiver is configured to transmit and receive data under control of the processor;
the processor is configured to read the computer program in the memory and perform the following operations:
acquiring configuration information of each candidate cell pre-configured and related to L1/L2 mobility;
controlling the transceiver to transmit an RRC message to a terminal, wherein the RRC message comprises the configuration information of each candidate cell pre-configured and related to L1/L2 mobility.

27. The network device according to claim 26, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

28. The network device according to claim 26, wherein the processor is further configured to:
control the transceiver to transmit a first network indication to the terminal, wherein the first network indication is used to indicate whether to apply configuration information of a current serving cell in the configuration information of each candidate cell by the terminal.

29. The network device according to claim 26, wherein the RRC message further comprises serving cell change or addition indication information, and the serving cell change or addition indication information is used to instruct the terminal to change to a target serving cell or add a target serving cell.

30. The network device according to claim 29, wherein the processor is further configured to:
control the transceiver to transmit a second network indication to the terminal, wherein the second network indication is used to indicate whether to apply configuration information of the target serving cell corresponding to the serving cell change or addition indication information in the configuration information of each candidate cell by the terminal.

31. An apparatus for processing configuration information about L1/L2 mobility, **characterized by** comprising:
a communicating unit, configured to receive a radio resource control RRC message transmitted by a network device, wherein the RRC message comprises configuration information of each candidate cell pre-configured and related to L1/L2 mobility;
a processing unit, configured to perform an application operation and/or a storage operation on the configuration information of each candidate cell.

32. The apparatus for processing configuration information about L1/L2 mobility according to claim 31, wherein when performing an application operation and/or a storage operation on the configuration information of each candidate cell, the processing unit is configured to:
for any configuration information of a candidate cell among the configuration information of each candidate cell received in the RRC message, if pre-stored configuration information comprises configuration information of the candidate cell, replace the pre-stored configuration information of the candidate cell with the newly received configuration information of the candidate cell; and/or
for any configuration information of a candidate cell among the configuration information of each candidate cell received in the RRC message, if pre-stored configuration information does not comprise the configuration information of the candidate cell, add the configuration information of the candidate cell to the pre-stored configuration information; and/or
for any configuration information of a candidate cell among the configuration information of each candidate cell received in the RRC message, if it is indicated from a network to delete the candidate cell, delete the configuration information of the candidate cell from pre-stored configuration information; and/or
delete pre-stored configuration information and store the configuration information of each candidate cell which is newly received in the RRC message.

33. The apparatus for processing configuration information about L1/L2 mobility according to claim 32, wherein when performing an application operation and/or a storage operation on the configuration information of each candidate cell, the processing unit is configured to:
if the configuration information of each candidate cell comprises configuration information of a current serving cell, apply the configuration information of the current serving cell in the configuration information of each candidate cell by default; or
if the configuration information of each candidate cell comprises configuration information of a current serving cell, continue applying configuration information currently used by the current serving cell by default; or
if the configuration information of each candidate cell comprises configuration information of a current serving cell, determine whether to apply the configuration information of the current serving cell in the configuration information of each candidate cell according to a network indication.

34. The apparatus for processing configuration information about L1/L2 mobility according to claim 33, wherein when determining whether to apply the configuration information of the current serving cell in the configuration information of each candidate cell according to a network indication, the processing unit is configured to:
if the network indication of applying the configuration information of the current serving cell is received, apply the configuration information of the current serving cell in the configuration information of each candidate cell; or
if the network indication of not applying the configuration information of the current serving cell is received, continue applying the configuration information currently used by the current serving cell.

35. The apparatus for processing configuration information about L1/L2 mobility according to claim 31, wherein when performing an application operation and/or a storage operation on the configuration information of each candidate cell, the processing unit is configured to:
if the RRC message further comprises serving cell change or addition indication information, perform one or more of the following operations on configuration information of each candidate cell:
applying common configuration information;
applying configuration information of a target serving cell corresponding to the serving cell change or addition indication information in the configuration information of each candidate cell by default;
continuing applying configuration information currently used by a current serving cell by default;
determining whether to apply configuration information of a target serving cell corresponding to the serving cell change or addition indication information in the configuration information of each candidate cell according to a network indication;
saving the configuration information of each candidate cell;
saving, among the configuration information of each candidate cell, configuration information of other candidate cell, excluding configuration information of a target serving cell.

36. The apparatus for processing configuration information about L1/L2 mobility according to claim 35, wherein when determining whether to apply configuration information of a target serving cell corresponding to the serving cell change or addition indication information in the configuration information of each candidate cell according to a network indication, the processing unit is configured to:
if the network indication of applying the configuration information of the target serving cell is received, apply the configuration information of the target serving cell corresponding to the serving cell change or addition indication information in the configuration information of each candidate cell; or
if the network indication of not applying the configuration information of the target serving cell is received, continue applying the configuration information currently used by a current serving cell.

37. The apparatus for processing configuration information about L1/L2 mobility according to any one of claims 31 to 36, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

38. The apparatus for processing configuration information about L1/L2 mobility according to any one of claims 31 to 36, wherein
the communicating unit is further configured to receive serving cell change or addition indication information transmitted by the network device through L1 and/or L2;
the processing unit is further configured to determine configuration information of a target serving cell corresponding to the serving cell change or addition indication information from the configuration information of each candidate cell stored, and apply the configuration information of the target serving cell.

39. The apparatus for processing configuration information about L1/L2 mobility according to any one of claims 31 to 36, wherein when performing the storage operation, the processing unit is configured to:
adopt a new variable to store the configuration information of each candidate cell.

40. The apparatus for processing configuration information about L1/L2 mobility according to claim 39, wherein when adopting a new variable to store the configuration information of each candidate cell, the processing unit comprises one or more of the following:
storing the configuration information of each candidate cell in form of a list, wherein each entry in the list records a candidate cell and configuration information of the candidate cell; or
adopting multiple variables to store configuration information of different layers in the configuration information of each candidate cell.

41. An apparatus for processing configuration information about L1/L2 mobility, **characterized by** comprising:
an acquiring unit, configured to acquire configuration information of each candidate cell pre-configured and related to L1/L2 mobility;
a communicating unit, configured to transmit an RRC message to a terminal, wherein the RRC message comprises the configuration information of each candidate cell pre-configured and related to L1/L2 mobility.

42. The apparatus for processing configuration information about L1/L2 mobility according to claim 41, wherein the configuration information of each candidate cell comprises at least one of the following configuration information:
first configuration information corresponding to each candidate cell, wherein the first configuration information comprises configuration information of a physical layer;
second configuration information corresponding to each candidate cell, wherein the second configuration information comprises configuration information of a physical layer, a MAC layer and an RLC layer;
third configuration information corresponding to each candidate cell, wherein the third configuration information comprises configuration information of a physical layer, a MAC layer, an RLC layer and a PDCP layer.

43. The apparatus for processing configuration information about L1/L2 mobility according to claim 41, wherein the communicating unit is further configured to:
transmit a first network indication to the terminal, wherein the first network indication is used to indicate whether to apply configuration information of a current serving cell in the configuration information of each candidate cell by the terminal.

44. The apparatus for processing configuration information about L1/L2 mobility according to claim 41, wherein the RRC message further comprises serving cell change or addition indication information, and the serving cell change or addition indication information is used to instruct the terminal to change to a target serving cell or add a target serving cell.

45. The apparatus for processing configuration information about L1/L2 mobility according to claim 44, wherein the communicating unit is further configured to:
transmit a second network indication to the terminal, wherein the second network indication is used to indicate whether to apply configuration information of the target serving cell corresponding to the serving cell change or addition indication information in the configuration information of each candidate cell by the terminal.

46. A processor-readable storage medium, **characterized in that** the processor-readable storage medium stores a computer program, and the computer program is used to enable the processor to execute the method according to any one of claims 1 to 10 or the method according to any one of claims 11 to 15.
